# EUROPEAN PATENT APPLICATION

(11) **EP 4 657 262 A1**
(43) Date of publication of application: **03.12.2025**
(21) Application number: 23920785.5
(22) Date of filing: 07.11.2023
(51) Int. Cl.: G06F 11/14

(54) **DATABASE BACKUP METHOD, APPARATUS AND COMPUTING DEVICE CLUSTER**

(30) Priority: 09.02.2023 CN 202310092095
(71) Applicant: Huawei Cloud Computing Technologies Co., Ltd., Guiyang, Guizhou 550025 (CN)
(72) Inventor: LI, Biao, Guiyang, Guizhou 550025 (CN); SU, Bin, Guiyang, Guizhou 550025 (CN); HAN, Ke, Guiyang, Guizhou 550025 (CN); XIONG, Gang, Guiyang, Guizhou 550025 (CN)
(74) Representative: Goddar, Heinz J.
(86) International application number: PCT/CN2023/130087
(87) International publication number: WO 2024/164593

(57) **Abstract**

The present invention provides a database backup method and apparatus, and a computing device cluster. In embodiments, a first corrupted-page inspection operation is performed on a first page in a data table of a database, to determine a first inspection result, where the first is used to record metadata of the data table; the first page is backed up when the first inspection result indicates that the first page is a normal page; a second corrupted-page inspection operation is performed on a second page in the data table based on the first page, to determine a second inspection result, where the second is used to record data in the data table; and the second page is backed up when the second inspection result indicates that the second page is a corrupted page. In this way, a backup process of the data table has a check and failure tolerance capability.

## Description

The present invention claims priority to Chinese Patent Application No. 202310092095.3, filed with the China National Intellectual Property Administration on February 9, 2023 and entitled "DATABASE BACKUP METHOD AND APPARATUS, AND COMPUTING DEVICE CLUSTER", which is incorporated herein by reference in its entirety.

### TECHNICAL FIELD

The present invention relates to the field of database backup technologies, and in particular, to a database backup method and apparatus, and a computing device cluster.

### BACKGROUND

Data in a database is stored in a non-volatile storage medium (commonly, for example, a disk, a disk array, a network storage, or a solid-state drive), and is usually stored by page. Backup is a frequently-used method for ensuring high reliability and preventing data loss and corruption in a database.

During running of a database, a page may be corrupted due to a silence error of a storage medium or the like. Currently, a method for backing up a database with a corrupted page is urgently needed.

### SUMMARY

Embodiments of the present invention provide a database backup method and apparatus, and a computing device cluster. Corrupted-page inspection can be performed on a first page of metadata of a data table. When the first page is corrupted, backup of the data table is skipped; or when the first page is normal, corrupted-page inspection is performed on a second page to which data in the data table belongs. When the second page is a corrupted page, the second page is backed up. In this way, a backup process of the data table has a check and failure tolerance capability.

According to a first aspect, an embodiment of the present invention provides a database backup method. A database includes a data table, and the method includes: performing a first corrupted-page inspection operation on a first page in the data table, to determine a first inspection result, where the first is used to record metadata of the data table; backing up the first page when the first inspection result indicates that the first page is a normal page; performing a second corrupted-page inspection operation on a second page in the data table based on the first page, to determine a second inspection result, where the second is used to record data in the data table; and backing up the second page when the second inspection result indicates that the second page is a corrupted page.

In this solution, corrupted-page inspection can be performed on the first page of the metadata of the data table. When the first page is corrupted, backup of the data table is skipped; or when the first page is normal, corrupted-page inspection is performed on the second page to which the data in the data table belongs. When the second page is a corrupted page, the second page is backed up. In this way, a backup process of the data table has a check and failure tolerance capability.

In a possible implementation, the second corrupted-page inspection operation includes: reading the second page, and checking the second page to obtain a second check result; and when the second check result is that the check fails, obtaining a first check code of the second page, where the first check code indicates content of the second page.

In a possible implementation, when second check results obtained through a plurality of consecutive second corrupted-page inspection operations are that check fails, and a first check value obtained through the last one of the plurality of consecutive second corrupted-page inspection operations is the same as a first check value obtained through a previous second corrupted-page inspection operation, the second inspection result indicates that the second page is a corrupted page.

In this solution, a failure of check on second pages obtained through a plurality of times of reading indicates that read page content is different from calculated page content, and the page remains in a state of being modified. In this case, page content obtained through any two times of reading varies. However, the first check value obtained through the last one of the plurality of consecutive second corrupted-page inspection operations being the same as a first check value obtained through any one of previous second corrupted-page inspection operations indicates that same page content is read. This may indicate that the page cannot be correctly read, and the page is corrupted.

In a possible implementation, the second page includes a second check code; and
the second check result that the check fails indicates that the second check code on the second page is different from a calculated third check code of the second page, where the second check code and the third check code are calculated by using a same algorithm and separately indicate the content of the second page.

In a possible implementation, the first check value is a hash value or the third check code.

In a possible implementation, when second check results obtained through a plurality of consecutive second corrupted-page inspection operations are that check fails, and first check results obtained through any two of the plurality of consecutive second corrupted-page inspection operations are different, the second inspection result indicates that the second page is a frequently used page; and the method further includes: when the second inspection result indicates that the second page is a frequently used page, re-performing a second corrupted-page inspection operation on the second page within a first time period, where the first time period is a time period in which a quantity of modifications on the second page is less than or equal to a preset threshold.

In this solution, a failure of check on second pages obtained through a plurality of times of reading indicates that read page content is different from calculated page content, and the page remains in a state of being modified. In this case, page content obtained through any two times of reading varies. However, first check values obtained through any two of the plurality of consecutive second corrupted-page inspection operations being the same indicates that read page content varies. This indicates that the second page keeps being modified and is a frequently used page. In this case, it is not suitable to back up the second page.

In a possible implementation, when the second check result obtained through the second corrupted-page inspection operation is that check succeeds, and the second inspection result is that the second page is a normal page, the method further includes: backing up the second page when the second inspection result is that the second page is a normal page.

In a possible implementation, the method further includes:
when the first inspection result is that the first page is a corrupted page, skipping backing up the data table.

In a possible implementation, the first corrupted-page inspection operation includes: reading the first page, and checking the read first page to obtain a first check result; and when first check results obtained through a plurality of consecutive first corrupted-page inspection operations are that check fails, the first inspection result is that the first page is a corrupted page.

In a possible implementation, the first check result that the check fails indicates that a fourth check code on the first page is different from a calculated fifth check code of the first page, where the fourth check code and the fifth check code are calculated by using a same algorithm and separately indicate the content of the first page.

In a possible implementation, the data table is marked with a first parameter value, the first parameter indicates a degree of acceptance for a corrupted page in the data table, and the first parameter value is greater than a first threshold.

In this solution, when a user can receive a corrupted page, to be specific, the data table stores service data in a high-availability scenario, a corrupted page in the data table may be backed up.

In a possible implementation, the database is marked with a second parameter value, the second parameter value indicates a degree of acceptance for a corrupted page in the database, and the second parameter value is greater than a second threshold.

In this solution, when a user can receive a corrupted page, to be specific, the database stores service data in a high-availability scenario, a corrupted page in the data table of the database may be backed up.

In a possible implementation, the database backup method is applied to a cloud management platform, and the database is a cloud database.

According to a second aspect, an embodiment of the present invention provides a database backup apparatus. The database backup apparatus includes several modules, and the modules are configured to perform the steps of the database backup method provided in the first aspect of embodiments of the present invention. Module division is not limited herein. For specific functions performed by the modules of the database backup apparatus and beneficial effects achieved by the modules, refer to the functions of the steps of the database backup method provided in the first aspect of embodiments of the present invention. Details are not described herein again.

For example, the database backup apparatus includes:
a first inspection module, configured to perform a first corrupted-page inspection operation on a first page in the data table, to determine a first inspection result, where the first is used to record metadata of the data table;
a first backup module, configured to back up the first page when the first inspection result indicates that the first page is a normal page;
a second inspection module, configured to perform a second corrupted-page inspection operation on a second page in the data table based on the first page, to determine a second inspection result, where the second is used to record data in the data table; and
a second backup module, configured to back up the second page when the second inspection result indicates that the second page is a corrupted page.

In a possible implementation, the second corrupted-page inspection operation includes: reading the second page, and checking the second page to obtain a second check result; and when the second check result is that the check fails, obtaining a first check code of the second page, where the first check code indicates content of the second page.

In a possible implementation, when second check results obtained through a plurality of consecutive second corrupted-page inspection operations are that check fails, and a first check value obtained through the last one of the plurality of consecutive second corrupted-page inspection operations is the same as a first check value obtained through a previous second corrupted-page inspection operation, the second inspection result indicates that the second page is a corrupted page.

In a possible implementation, the second page includes a second check code; and
the second check result that the check fails indicates that the second check code on the second page is different from a calculated third check code of the second page, where the second check code and the third check code are calculated by using a same algorithm and separately indicate the content of the second page.

In a possible implementation, the first check value is a hash value or the third check code.

In a possible implementation, when second check results obtained through a plurality of consecutive second corrupted-page inspection operations are that check fails, and first check results obtained through any two of the plurality of consecutive second corrupted-page inspection operations are different, the second inspection result indicates that the second page is a frequently used page; and the second backup module is configured to: when the second inspection result indicates that the second page is a frequently used page, re-perform a second corrupted-page inspection operation on the second page within a first time period, where the first time period is a time period in which a quantity of modifications on the second page is less than or equal to a preset threshold.

In a possible implementation, when the second check result obtained through the second corrupted-page inspection operation is that check succeeds, and the second inspection result is that the second page is a normal page, the second backup module is configured to back up the second page when the second inspection result is that the second page is a normal page.

In a possible implementation, the first backup module is further configured to: when the first inspection result is that the first page is a corrupted page, skip backing up the data table.

In a possible implementation, the first corrupted-page inspection operation includes: reading the first page, and checking the read first page to obtain a first check result; and when first check results obtained through a plurality of consecutive first corrupted-page inspection operations are that check fails, the first inspection result is that the first page is a corrupted page.

In a possible implementation, the first check result that the check fails indicates that a fourth check code on the first page is different from a calculated fifth check code of the first page, where the fourth check code and the fifth check code are calculated by using a same algorithm and separately indicate the content of the first page.

In a possible implementation, the data table is marked with a first parameter value, the first parameter indicates a degree of acceptance for a corrupted page in the data table, and the first parameter value is greater than a first threshold.

In a possible implementation, a database is marked with a second parameter value, the second parameter value indicates a degree of acceptance for a corrupted page in the database, and the second parameter value is greater than a second threshold.

In a possible implementation, the database backup apparatus is deployed on a cloud management platform, and the database is a cloud database.

According to a third aspect, an embodiment of the present invention provides a database backup apparatus, including: at least one memory, configured to store a program; and at least one processor, configured to execute the program stored in the memory. When the program stored in the memory is executed, the processor is configured to perform the method provided in the first aspect.

According to a fourth aspect, an embodiment of the present invention provides a database backup apparatus. The apparatus runs computer program instructions to perform the method provided in the first aspect. For example, the apparatus may be a chip or a processor.

In an example, the apparatus may include a processor. The processor may be coupled to a memory, read instructions in the memory, and perform, according to the instructions, the method provided in the first aspect. The memory may be integrated into a chip or a processor, or may be independent of a chip or a processor.

According to a fifth aspect, an embodiment of the present invention provides a computing device cluster, including at least one computing device. Each computing device includes a processor and a memory. A processor of the at least one computing device is configured to execute instructions stored in a memory of the at least one computing device, to enable the computing device cluster to perform the method provided in the first aspect.

According to a sixth aspect, an embodiment of the present invention provides a computer storage medium. The computer storage medium stores instructions. When the instructions are run on a computer, the computer is enabled to perform the method provided in the first aspect, or perform the method provided in the third aspect.

According to a seventh aspect, an embodiment of the present invention provides a computer program product including instructions. When the instructions are run on a computer, the computer is enabled to perform the method provided in the first aspect.

### BRIEF DESCRIPTION OF DRAWINGS

FIG. 1 is a diagram of a system architecture of a database backup system according to an embodiment of the present invention;
FIG. 2 is a schematic flowchart of a database backup method according to an embodiment of the present invention;
FIG. 3 is a diagram of a database backup method according to an embodiment of the present invention;
FIG. 4A and FIG. 4B are a schematic flowchart of a database backup method according to FIG. 3;
FIG. 5 is a diagram of a structure of a database backup apparatus according to an embodiment of the present invention;
FIG. 6 is a diagram of a structure of a computing device according to an embodiment of the present invention;
FIG. 7 is a diagram of a structure of a computing device cluster according to an embodiment of the present invention; and
FIG. 8 is a diagram of an example of a computing device cluster according to FIG. 7.

### DESCRIPTION OF EMBODIMENTS

To make objectives, technical solutions, and advantages of embodiments of the present invention clearer, the following describes the technical solutions of embodiments of the present invention with reference to accompanying drawings.

In descriptions of embodiments of the present invention, the term "example", "for example", or the like is used to give an example, an illustration, or a description. Any embodiment or design scheme described with "example", "for example", or "in an example" in embodiments of the present invention should not be construed as being more preferred or advantageous than another embodiment or design scheme. To be precise, the term "example", "for example", "in an example", or the like is intended to present a related concept in a specific manner.

In descriptions of embodiments of the present invention, the term "and/or" describes only an association relationship between associated objects, and indicates that three relationships may exist. For example, A and/or B may indicate the following three cases: Only A exists, only B exists, and both A and B exist. In addition, the term "a plurality of " means two or more, unless otherwise specified. For example, a plurality of systems are two or more systems, and a plurality of terminals are two or more terminals.

In addition, the terms "first" and "second" are merely intended for description, and shall not be understood as an indication or implication of relative importance or an implicit indication of an indicated technical feature. Therefore, a feature limited by "first" or "second" may explicitly or implicitly include one or more features. The terms "including", "comprising", "having", and their variants all mean "including but are not limited to", unless otherwise specifically emphasized in another manner.

Backup and recovery are necessary means in database application scenarios. Backup and recovery are a common method for implementing high reliability and preventing data loss and corruption for a database. In addition, in most scenarios, backup and recovery are also an important part of a high-availability architecture implemented by a database vendor. For example, a standby node or a read-only node is quickly established through backup and recovery.

Currently, backup is mainly implemented in the following manners:
CHECK TABLE: a tool or command provided by the MySQL official community to inspect whether a data page in a table is correct. A large amount of content is to be inspected. In addition to whether data on a page is correct, whether a relationship between pages, a record slot, and other content are correct is further inspected.

Logical backup tools such as Mysqldump and Mydumper: The tool exports data logic as a specific SQL statement to implement a backup function.

Physical backup tool Percona XtraBackup: an official physical backup tool provided by Percona. The tool backs up physical data files and incremental redo logs to implement a backup and recovery technology in a hot backup mode.

EVS snapshot-based backup and recovery technology: Currently, cloud service vendors provide snapshot-based backup and recovery methods for cloud disk-based databases. Data is backed up based on a snapshot capability of EVS. An advantage lies in a high backup speed.

innodb_force_recovery: an official parameter provided by MySQL to provide some workaround options for scenarios in which a database cannot be started due to data corruption.

However, the foregoing solutions have the following problems:
CHECK TABLE: Execution time is excessively long, a routine inspection condition is not met. When it is detected that a page is corrupted, a database may directly crash. An inspection process affects host services. Only a data check function can be performed.

Logical backup tools such as Mysqldump and Mydumper: Backup and recovery time is excessively long, and therefore the tool is not suitable for daily full backup or full data recovery. A backup process affects host services, for example, DDL (data definition language, data definition language, which is mainly used for initialization, for example, defining or changing a table (TABLE) structure, a data type, or a link and a constraint between tables, and is mainly used during table establishment). If it is found, during backup, that a page is corrupted, a database crashes, and the backup fails.

Physical backup tool Percona XtraBackup: A data file to be backed up is verified. However, if a corrupted page is found, backup fails, and the corrupted page cannot be backed up. Corrupted-page check is performed on a limited quantity of files, and the check stops when a corrupted page is found. No error is allowed during recovery, and the recovery process directly exits if an error page exists. If innodb_force_recovery is used, no data can be written to a database.

EVS snapshot-based backup and recovery technology: Data cannot be verified during backup. A corrupted page may be backed up without being detected. No error is allowed during recovery, and the recovery process directly exits if an error page exists. If innodb_force_recovery is used, no data can be written to a database. Only a cloud disk is supported, and no local disk is supported.

innodb_force_recovery: This parameter is applicable only to a crash recovery scenario. If an instance with this parameter enabled is in a read-only state, no write service can be performed.

To sum up, during running of a database, a data page may be corrupted due to a silence error of a storage medium or the like. Currently, high reliability is needed for backup of a database. Therefore, a database with a corrupted page cannot be backed up. Therefore, currently, there is no method for backing up a database with a corrupted page.

In embodiments of the present invention, a database is a "warehouse for organizing, storing, and managing data based on a data structure". Data in a database is stored in a file or a raw disk. However, a file or a raw disk is quite large. In some databases, all data is stored in one file. In some databases, all data is stored in a plurality of files. For ease of management, a database engine divides large disk space into many small blocks, and the block is referred to as a page (page). In other words, a database stores data by using pages.

A database may be a database that stores data based on a two-dimensional table model. For example, the database may be a relational database. The two-dimensional table model stores data in a form of a row and a column. A series of rows and columns are referred to as a table. The table is used to store data. Therefore, the table is referred to as a data table in embodiments of the present invention. A plurality of data tables form a database.

For each data table in a database, the data table includes a plurality of pages. The pages are classified into a page for storing metadata (for ease of description, the page is referred to as a first page) and a page for storing data in the data table (for ease of description, the page is referred to as a second page). Usually, there is only one first page, used to record metadata such as a size, a quantity of rows, and a quantity of columns of the second page, and a field represented by a column. There are a plurality of second pages.

When a page in a database is corrupted, a page corruption scenario needs to be recognized for a service that needs a high-reliability scenario, to ensure correctness of a page to be backed up. In a scenario in which high availability needs to be ensured, if a customer can accept corruption or loss of a part of data, after a corrupted page is detected during backup, it is required that the corrupted page can still be backed up. In addition, a research and development person or an operation and maintenance person can restore a new instance by using a backed-up corrupted page, to perform problem locating or further implement high-reliability recovery.

Based on this, to resolve the foregoing problems, embodiments of the present invention provide the following technical solution for database backup.

In the method, corrupted-page inspection is performed on a first page that is in a data table and that records metadata. When it is determined that the first page recording the metadata is not corrupted, corrupted-page inspection is performed on a second page that is in the data table and that records data. When it is determined that the second page recording the data is corrupted, the page is backed up, so that a backup process of the data table in a database has a failure tolerance capability. In a later stage, in a scenario in which the database crashes or the database needs to be replicated, even if a backed-up page includes a corrupted page, the database can still be recovered or replicated based on the backed-up page. In this way, the corrupted page is backed up, and the database is restored to a maximum extent. This is only a brief description of the method. For detailed content of the method, refer to the following descriptions.

It should be noted that the database backup method provided in embodiments of the present invention is applicable to a data table that stores data of a service in a high-availability scenario.

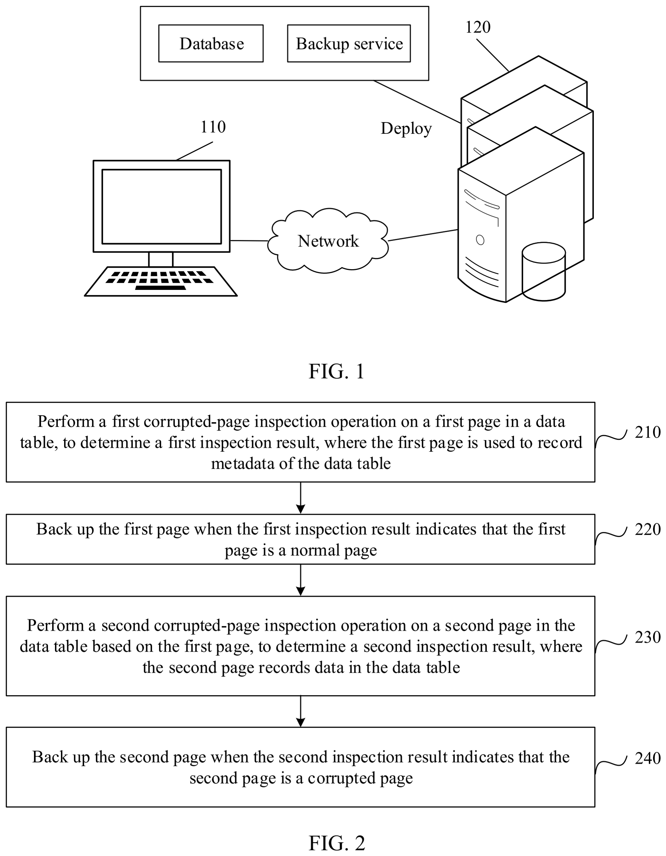

FIG. 1 is a diagram of an example architecture of a database backup system to which embodiments of the present invention are applied. It should be understood that the data backup system to which embodiments of the present invention are applicable may be further applicable to a data backup system other than the data backup system shown in FIG. 1. This is not limited in embodiments of the present invention. As shown in FIG. 1, the data backup system includes a terminal device 110 and a computing device cluster 120.

The terminal device 110 may be but is not limited to a personal computer, a notebook computer, a smartphone, a tablet computer, and a portable wearable device. An example embodiment of the terminal device 110 in this embodiment of the present invention includes but is not limited to an electronic device on which iOS, Android, Windows, HarmonyOS (HarmonyOS), or another operating system is installed. A type of the electronic device is not specifically limited in this embodiment of the present invention.

The computing device cluster 120 is a cluster including several computing devices. The computing device may be a server, for example, a central server, an edge server, or a local server in a local data center. In some embodiments, the computing device may alternatively be a terminal device, for example, a desktop computer, a notebook computer, or a smartphone. In some embodiments, the computing device in the computing device cluster 120 in this solution may be configured to provide a cloud service, and may be a server or a hyper terminal that can establish a communication connection to another device and can provide an operation function and/or a storage function for the another device. In addition, the computing device may be a hardware server, or a virtual server may be deployed. The virtual server is embedded into a virtual environment. For example, the server in this embodiment of the present invention may be a virtual machine executed on a hardware server including one or more other virtual machines.

The terminal device 110 communicates with the computing device cluster 120 through a network. The network may be a wired network or a wireless network. For example, the wired network may be a cable network, a fiber-optic network, or a digital data network (Digital Data Network, DDN), and the wireless network may be a telecommunication network, an internal network, an internet, a local area network (Local Area Network, LAN), a wide area network (Wide Area Network, WAN), a wireless local area network (Wireless Local Area Network, WLAN), a metropolitan area network (Metropolitan Area Network, MAN), a public switched telephone network (Public Switched Telephone Network, PSTN), a Bluetooth network, a ZigBee (ZigBee) network, a mobile phone (Global System for Mobile Communications, GSM), a CDMA (Code Division Multiple Access) network, a CPRS (General Packet Radio Service) network, or any combination thereof. It can be understood that the network may use any known network communication protocol to implement communication between different client layers and gateways. The network communication protocol may be any wired or wireless communication protocol, for example, Ethernet, universal serial bus (universal serial bus, USB), firewire (firewire), global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), new radio (new radio, NR), Bluetooth (Bluetooth), or wireless fidelity (wireless fidelity, Wi-Fi).

In this embodiment of the present invention, a database and a backup service are deployed in the computing device cluster 120, and a data table in the database is backed up by using the backup service. During the backup, whether a first page that is in the data table and that records metadata is a corrupted page is first verified. When the first page is a normal page, for a second page that is in the data table and that records data, whether the second page is a corrupted page is verified. When the second page is a corrupted page, the second page is backed up. In this way, the backup process of the data table in the database has a check and failure tolerance capability.

It should be noted that a database in a high-availability scenario (for ease of description and differentiation, the database is referred to as a first database) allows a corrupted page. In other words, the first database stores data of a service in the high-availability scenario by using a data table. A database in a high-reliability scenario (for ease of description and differentiation, the database is referred to as a second database) does not allow a corrupted page. In other words, the second database stores data of a service in the high-reliability scenario by using a data table. Therefore, when the database in this embodiment of the present invention is a first data table, in other words, when the database is the first database in the high-availability scenario, a data table in the first database is backed up by using the database backup method provided in embodiments of the present invention, so that a database backup process has a check and failure tolerance capability, to meet a service requirement in the high-availability scenario.

It should be noted that, in a scenario in which the computing device provides a cloud service, in other words, the computing device cluster 120 serves as a cloud, the database is a cloud database. During actual application, a cloud management platform is deployed in the computing device cluster 120, and the terminal device 110 may access the cloud management platform to enable a backup service for the database (cloud database), to implement the database backup method provided in embodiments of the present invention by using the backup service. The backup service may be deployed on the cloud management platform.

The following describes in detail a database backup method provided in embodiments of the present invention with reference to the database backup system provided above.

FIG. 2 is a schematic flowchart of a database backup method according to an embodiment of the present invention. This embodiment may be applied to a computing device providing a backup service in the computing device cluster 120. For ease of description and differentiation, a computing device providing a backup service is referred to as a first computing device, and a computing device storing a data table in a database is referred to as a second computing device. The second computing device may be one computing device or a plurality of computing devices.

The database includes a plurality of data tables. As shown in FIG. 2, the database backup method provided in this embodiment of the present invention includes at least the following steps.

Step 210: Perform a first corrupted-page inspection operation on a first page in a data table, to determine a first inspection result, where the first is used to record metadata of the data table.

According to a feasible implementation, the data table stores data of a service in a high-availability scenario.

In a possible case of this implementation, a first parameter value of a first parameter is configured for the data table. The first parameter indicates a degree of acceptance for a corrupted page in the data table. A larger first parameter value indicates a higher degree of acceptance for a corrupted page in the data table. This indicates that the data table is a data table used for a service in a high-availability scenario. For example, a first threshold may be set. The first threshold indicates a lower limit of a degree of acceptance for a corrupted page in a high-availability scenario. For example, the first threshold may be 0. The first parameter value being greater than or equal to the first threshold indicates that the data table is a data table used for a service in a high-availability scenario. In this case, the database backup method provided in this embodiment of the present invention may be used to back up the data table.

In a possible case of this implementation, the data table is a data table in a first database, and the first database stores data of a service in a high-availability scenario by using the data table. For example, a second parameter value of a second parameter is configured for the first database. The second parameter indicates a degree of acceptance for a corrupted page in the database. A larger second parameter value indicates a higher degree of acceptance for a corrupted page in the database. This indicates that the database is a database used for a service in a high-availability scenario. For example, a second threshold may be set. The second threshold indicates a lower limit of a degree of acceptance for a corrupted page in a high-availability scenario. For example, the second threshold may be 0. The second parameter value being greater than or equal to the second threshold indicates that the database is a database used for a service in a high-availability scenario. In this case, the database backup method provided in this embodiment of the present invention may be used to back up each data table in the first database.

Step 220: Back up the first page when the first inspection result indicates that the first page is a normal page.

Backing up the first page may be understood as replicating the first page.

Step 230: Perform a second corrupted-page inspection operation on a second page in the data table based on the first page, to determine a second inspection result, where the second is used to record data in the data table.

Step 240: Back up the second page when the second inspection result indicates that the second page is a corrupted page.

Backing up the second page may be understood as replicating the second page.

In this embodiment of the present invention, when the data table stores data of a service in a high-availability scenario, corrupted-page inspection is performed on the first page that is in the data table and that records the metadata. When it is determined that the first page recording the metadata is not corrupted, corrupted-page inspection is performed on the second page that is in the data table and that records the data. When it is determined that the second page recording the data is corrupted, the page is backed up, so that a backup process of the data table in the database has a check and failure tolerance capability. In a later stage, in a scenario in which the database crashes or the database needs to be replicated, even if a backed-up page includes a corrupted page, the database can still be recovered or replicated based on the backed-up page. In this way, the corrupted page is backed up, and the database is restored to a maximum extent.

According to a feasible implementation, the first corrupted-page inspection operation in step 210 includes: reading the first page in the data table from the database, and checking the first page to obtain a first check result.

The first page includes a check code. The check code represents content of the first page. Check codes of different page content are different. For ease of description and differentiation, the check code is referred to as a check code A1. For example, the check code A1 may be stored at the first bit of the first page, or may be stored at the last bit of the first page. For example, the check code A1 is a result calculated by using a check code algorithm (for ease of description and differentiation, the check code algorithm is referred to as a check code algorithm C1), for example, a checksum (checksum). The checksum is used to "accumulate" checked data and omit a bit that overflows during the "accumulation", to finally obtain a result of one or more bytes. The "accumulation" may be simple integer addition check, ones' complement addition check, or the like. The integer addition check is to accumulate data values (measured in bits, for example, 16 bits) and finally omit a most significant bit. The ones' complement addition check is to first perform an integer addition operation and then add a carry bit to a result of the integer addition operation.

Checking the first page may include performing verification on page content.

In a possible case, after the verification on the page content succeeds, the first check result is that the check succeeds; otherwise, the first check result is that the check fails.

For example, the first computing device may read the first page in the data table from the second computing device on which the database is located. The first computing device may load a library function of the database, where the library function includes a corruption check function, for example, a Corrupted() function, which is used to determine whether a page is in a corrupted state. Then the first computing device uses the first page as input for the corruption check function in the library function, to invoke the corruption check function of the database. The corruption check function calculates a check code of the first page (for ease of description and differentiation, the check code is referred to as a check code A2) by using the check code algorithm C1, and compares the check code with the check code A1 recorded on the first page, to obtain the first check result of the first page. It should be noted that the check code A1 on the first page and the calculated check code A2 are calculated by using the same check code algorithm C1. Herein, the first check result indicates whether the calculated check code A2 of the first page is the same as the check code A1 on the first page. When the calculated check code A2 of the first page is the same as the check code A1 on the first page, the first check result is that the check succeeds; or when the calculated check code A2 of the first page is different from the check code A1 on the first page, the first check result is that the check fails.

Further, the first page further records whether the data table is encrypted. If the data table is not encrypted, after the verification on the page content succeeds, the first check result is that the check succeeds; otherwise, the check fails. If the data table is encrypted, the first page further records a key. In this case, after the verification on the page content and verification on the key both succeed, the first check result is that the check succeeds.

For example, the first computing device may read the first page in the data table from the second computing device on which the database is located. The first computing device may load a library function of the database, where the library function includes a corruption check function, for example, a Corrupted() function. Then the first computing device uses the first page as input for the corruption check function in the library function, to invoke the corruption check function of the database. The corruption check function calculates a check code of the first page (for ease of description and differentiation, the check code is referred to as a check code A2) by using the check code algorithm C1, and compares the check code with the check code A1 recorded on the first page. When the check code is the same as the check code A1, verification is performed on a key by using a key algorithm. When the verification succeeds, it is determined that the first check result is that the check succeeds; otherwise, the first check result is that the check fails.

Further, the first inspection result in step 210 is described.

During specific implementation, the first computing device may determine a maximum quantity of times of performing a first corrupted-page inspection operation on the first page, for example, N (a positive integer greater than or equal to 1) times. Then the first computing device performs a first corrupted-page inspection operation on the first page, and when a first check result of the first corrupted-page inspection operation indicates that check fails, continues to perform a first corrupted-page inspection operation on the first page. It should be noted that the quantity N of times of check may be determined based on a load status of the first computing device used by the backup service. If the load is low, N may be large; or if the load is high, N may be small.

In a possible case, if a first check result of an i^{th} (a positive integer greater than or equal to 1 and less than or equal to N) first corrupted-page inspection operation among the N times indicates that check succeeds, a subsequent first corrupted-page inspection operation on the first page is suspended, and a first inspection result that the first page is a normal page is determined. Further, the first computing device backs up the first page in the data table.

In a possible case, when N is greater than or equal to 2, if first check results of N consecutive first corrupted-page inspection operations indicate that check fails, a first inspection result that the first page is a corrupted page is determined. Further, the first computing device skips backing up the data table, to be specific, does not need to back up the first page or the second page in the data table.

According to a feasible implementation, the second corrupted-page inspection operation in step 230 includes: reading any second page in the data table from the database, and checking the second page to obtain a second check result; and when the second check result is that the check fails, obtaining a check code of the second page (for ease of description and differentiation, the check code is referred to as a check code B1).

Checking the second page may include performing verification on page content.

In a possible case, after verification on content of the first page succeeds, the first check result is that the check succeeds; otherwise, the first check result is that the check fails.

For example, the first computing device may read the second page in the data table from the second computing device on which the database is located. The second page includes a check code (for ease of description and differentiation, the check code is referred to as a check code B2). For example, the check code B2 may be stored at the first bit of the second page, or may be stored at the last bit of the second page. For example, the check code B2 is a checksum calculated by using a check code algorithm (for ease of description and differentiation, the check code algorithm is referred to as a check code algorithm C2). Then the second page is used as input for the corruption check function in the library function, to invoke the corruption check function of the database. The corruption check function calculates a check code of the second page (for ease of description and differentiation, the check code is referred to as a check code B3) by using the check code algorithm C2, and compares the check code with the check code B2 recorded on the second page, to obtain the second check result of the second page. It should be noted that the check code B2 on the second page and the calculated check code B3 are calculated by using the same check code algorithm C2. Herein, the second check result indicates whether the calculated check code B3 of the second page is the same as the check code B2 on the second page. When the calculated check code B3 of the second page is the same as the check code B2 on the second page, the second check result is that the check succeeds; or when the calculated check code B3 of the second page is different from the check code B2 on the second page, the second check result is that the check fails. Optionally, the check code B1 may be the check code B3. Optionally, because specific implementation details of the check code algorithm C2 are unknown, a check code algorithm may be set (for ease of description and differentiation, the check code algorithm may be referred to as a check code algorithm C3). For example, the check code algorithm may be a hash algorithm, and a check code of the second page is calculated by using the specified check code algorithm C3 to obtain the check code B1. Herein, the check code algorithm C3 may be the same as or different from the check code algorithm C2.

Further, the second inspection result in step 230 is described.

During specific implementation, the first computing device may determine a maximum quantity of times of performing a second corrupted-page inspection operation on the second page, for example, M (a positive integer greater than or equal to 2) times. Then the first computing device performs a 1^{st} second corrupted-page inspection operation on the second page; when a second check result of the second corrupted-page inspection operation indicates that check fails, obtains a check code B1 of the second page, and continues to perform a 2^{nd} first corrupted-page inspection operation on the second page; and when a second check result of the second corrupted-page inspection operation indicates that check fails, and an obtained check code B1 is different from the check code B1 obtained in the previous second corrupted-page inspection operation, continues to perform a second corrupted-page inspection operation on the second page.

It should be noted that, when reading the second page, the first computing device on which the backup service is located may perform reading for a plurality of times, to read the second page. In addition, a user may normally use the second page, and may perform an operation, for example, deletion or modification, on data on the second page. In this case, modified data may be read during reading of the second page because reading is performed for a plurality of times. For example, it is assumed that a size of the second page is M megabytes and M/2 megabytes are read at a time. In this case, reading needs to be performed twice to read the second page.

For example, it is assumed that a size of the second page is M megabytes, M/2 megabytes are read at a time, the second page includes a check code B2 stored at the first bit of the second page, and the first M/2 megabytes of the second page have been read. In a possible case, the user performs an operation on the last M/2 megabytes of data of the second page, and then reads the last M/2 megabytes of data that have been modified to obtain the second page. In this case, the read check code B2 on the second page represents data that is not modified. Therefore, the read check code B2 on the second page is different from a calculated check code B3 of the second page, and a second check result is that check fails. In another possible case, the user performs an operation on the first M/2 megabytes of data of the second page, and then reads the last M/2 megabytes of data to obtain the second page. In this case, a read check code B2 on the second page represents data that is not modified. Because the M/2 megabytes of data obtained through the second time of reading does not change, the check code B2 on the second page is the same as a calculated check code B3 of the second page, and a second check result is that check succeeds.

For example, it is assumed that a size of the second page is M megabytes, M/2 megabytes are read at a time, the second page includes a check code B2 stored at the last bit of the second page, and the first M/2 megabytes of the second page have been read. In a possible case, the user performs an operation on the last M/2 megabytes of data of the second page, and then reads modified the last M/2 megabytes of data to obtain the second page. In this case, the read check code B2 on the second page represents data obtained by modifying the last M/2 megabytes. Therefore, the read check code B2 on the second page is the same as a calculated check code B3 of the second page, and a second check result is that check succeeds. In another possible case, the user performs an operation on the first M/2 megabytes of data of the second page, and then reads the last M/2 megabytes of data to obtain the second page. In this case, the read check code B2 on the second page represents data obtained by modifying the first M/2 megabytes. Because the M/2 megabytes of data obtained through the first time of reading are non-modified data, the check code B2 on the second page is the same as a calculated check code B3 of the second page, and a second check result is that check fails.

To sum up, the read check code B2 on the second page being different from the calculated check code B3 of the second page indicates that data on the second page is modified during reading of the second page.

In addition, in a possible scenario, second check results determined in a plurality of second corrupted-page inspection operations are all that check fails, to be specific, a read second page is different from an actual second page. This indicates that the second page keeps being modified, and content, obtained through a plurality of times of reading, of the second page varies, to be specific, content, obtained through any two times of reading, of the second page varies.

In this scenario, in a possible case, page content, obtained through any two of a plurality of times of reading, of the second page varies, that is, a check code B1 varies. This indicates that the second page is frequently modified, and it is determined that the second inspection result is that the second page is a frequently used page. In this case, it is not suitable to back up the second page, and backup of the second page may be skipped. Subsequently, the second page may be backed up within a first time period in which the second page is less frequently modified. For example, the first time period is a time period in which a quantity of modifications on the second page is less than a preset threshold. Herein, the preset threshold may be 0. To be specific, the second page is backed up within a time period in which the second page is not modified. The preset threshold being 0 is merely an example, and does not constitute a specific limitation. During actual application, the preset threshold may be flexibly set according to an actual requirement.

In this scenario, in a possible case, it is determined that page content, obtained through the last one of a plurality of times of reading, of the second page is the same as page content, obtained through any previous reading, of the second page, that is, check codes B1 are the same. This indicates that the page content obtained through the two times of reading is the same. However, second check results obtained in the plurality of times of reading are that check fails, to be specific, content, obtained through any two times of reading, of the second page varies. This indicates that the second page cannot be correctly read, and the second page can be considered as a corrupted page. It is determined that the second inspection result is that the second page is a corrupted page.

Based on the foregoing descriptions, in a possible case, if a second check result obtained through an i^{th} (a positive integer greater than or equal to 1 and less than or equal to N) second corrupted-page inspection among M times indicates that check succeeds, a subsequent second corrupted-page inspection operation on the second page is suspended, and a second inspection result that the second page is a normal page is determined. Further, the first computing device backs up the second page in the data table.

In a possible implementation, if second check results of a plurality of consecutive second corrupted-page inspection operations indicate that check fails, and a check value B1 obtained through the last one of the plurality of second corrupted-page inspection operations is the same as a check value B1 obtained through any previous second corrupted-page inspection operation, a second inspection result that the second page is a corrupted page is determined. For example, if second check results of a plurality of consecutive second corrupted-page inspection operations indicate that check fails, and check values B1 obtained through the last two of the plurality of second corrupted-page inspection operations are the same, a second inspection result that the second page is a corrupted page is determined. Further, the first computing device backs up the second page in the data table.

In a possible case, if second check results of M consecutive second corrupted-page inspection operations indicate that check fails, and check values B1 obtained through any two adjacent second corrupted-page inspection operations among the M second corrupted-page inspection operations are different, a second inspection result that the second page is a frequently used page is determined. Further, the first computing device skips backing up the second page, and may subsequently re-perform a second corrupted-page inspection operation on the second page in the data table within a first time period in which the second page is less frequently modified, to ensure that a correct page can be backed up.

It should be noted that names of the check codes B1, B2, B3, A1, and A2 are merely examples. During actual application, the check codes B1, B2, B3, A1, and A2 may be referred to as a first check code, a second check code, a third check code, a fourth check code, and a fifth check code respectively.

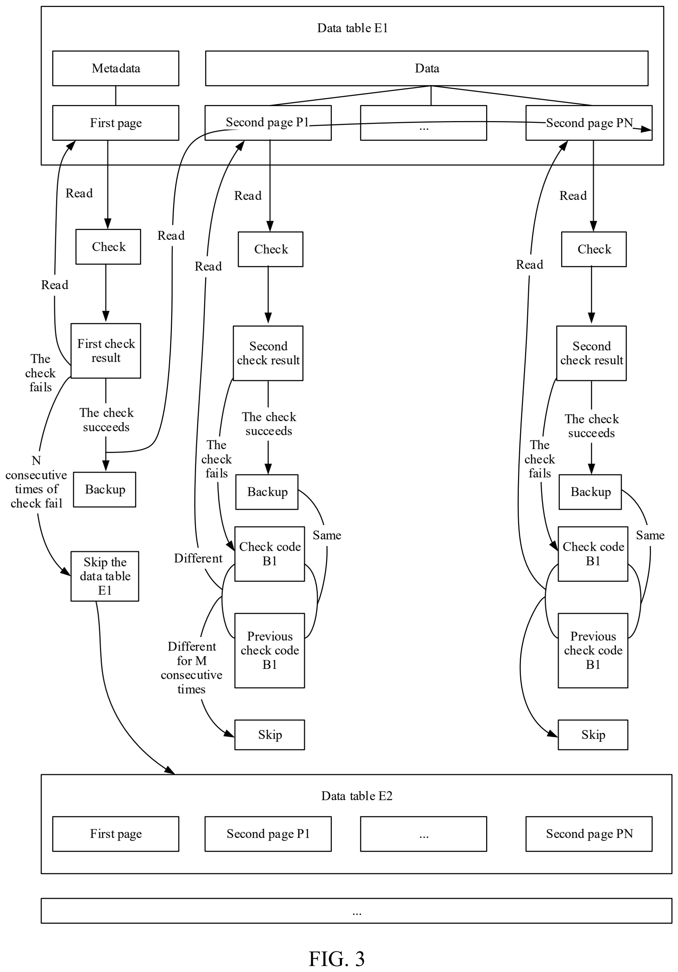

Based on the database backup method provided above, a specific example of the database backup method is provided. FIG. 3 is a diagram of a specific example of a database backup method according to an embodiment of the present invention. As shown in FIG. 3, in this embodiment of the present invention, a database includes a plurality of data tables that are denoted as a data table E1, a data table E2, and so on. During backup of the database, backup is first performed for the data table E1. During backup of the data table E1, whether a first page in the data table E1 is a corrupted page is first determined. A specific determining process is as follows:

The first page is read, and the first page is checked to obtain a first check result. When the first check result indicates that the check succeeds, the first page is backed up. When the first check result indicates that the check fails, the first page is further read and checked. If N consecutive times of check fail, backup of the data table E1 is skipped, and backup is performed for a next data table E2. For detailed content, refer to the foregoing descriptions of step 210. Details are not described again.

Then, when the first page is backed up, backup is performed for each second page in the data table E1.

For each second page in the data table E1, whether the second page is a corrupted page is determined. A specific determining process is as follows:
The second page is read, and the second page is checked to obtain a second check result. When the first check result indicates that the check succeeds, the second page is backed up. When the second check result indicates that the check fails, a check code B1 of the second page is obtained, and the second page is further read and checked. This process is repeated. If M consecutive times of check fail and check codes B1 obtained through any two times of reading are different, backup of the second page is skipped. For detailed content, refer to the foregoing descriptions of step 230. Details are not described again.

During actual application, a plurality of second pages in the data table E1 may be backed up in parallel.

In addition, FIG. 3 is merely an example, and does not constitute a specific limitation. During actual application, a plurality of data tables may be backed up in parallel.

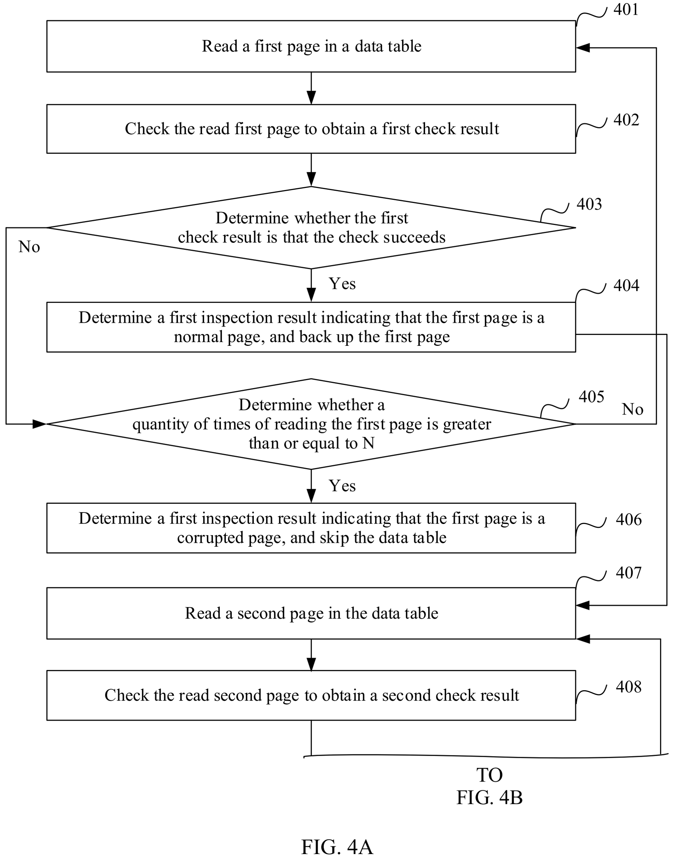

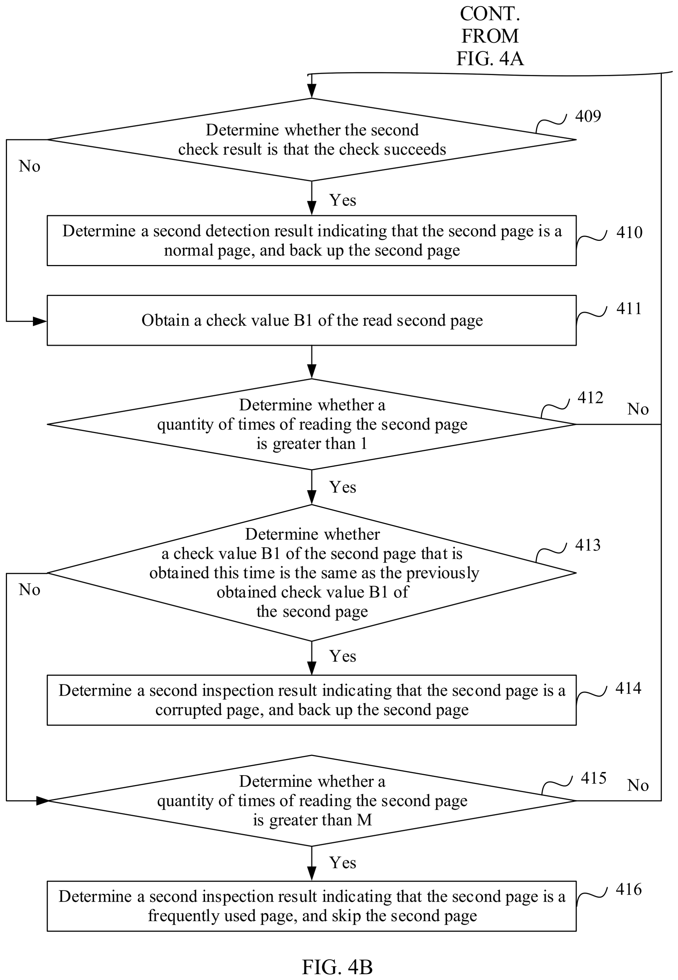

FIG. 4A and FIG. 4B are a schematic flowchart of the data table backup method shown in FIG. 3. As shown in FIG. 4A and FIG. 4B, the data table backup method includes the following steps.

Step 401: Read a first page in a data table.

Step 402: Check the read first page to obtain a first check result.

It should be noted that step 401 and step 402 are the first corrupted-page inspection operation in step 210. For detailed content of step 401 and step 402, refer to the foregoing descriptions of step 210.

Step 403: Determine whether the first check result is that the check succeeds; and if yes, perform step 405, or if no, perform step 405.

Step 404: Determine a first inspection result that the first page is a normal page, back up the first page, and perform step 407.

Step 405: Determine whether a quantity of times of reading the first page is greater than or equal to N; and if yes, perform step 406, or if no, perform step 401.

Step 406: Determine a first inspection result that the first page is a corrupted page, and skip the data table.

Step 403 to step 406 are content about determining the first inspection result. For detailed content, refer to the foregoing descriptions of related content about determining the first inspection result.

Step 407: Read a second page in the data table.

Step 408: Check the read second page to obtain a second check result.

Step 409: Determine whether the second check result is that the check succeeds; and if yes, perform step 410, or if no, perform step 411.

Step 410: Determine a second inspection result that the second page is a normal page, and back up the second page.

Step 411: Obtain a check value B1 of the read second page.

It should be noted that step 407 and step 411 are the second corrupted-page inspection operation in step 230. For detailed content of step 407 to step 411, refer to the foregoing descriptions of step 230.

Step 412: Determine whether a quantity of times of reading the second page is greater than 1; and if yes, perform step 413, or if no, perform step 407.

Step 413: Determine whether a check value B1 of the second page that is obtained this time is the same as the previously obtained check value B1 of the second page; and if yes, perform step 414, or if no, perform step 415.

Step 414: Determine a second inspection result that the second page is a corrupted page, and back up the second page.

Step 415: Determine whether a quantity of times of reading the second page is greater than or equal to M; and if yes, perform step 416, or if no, perform step 407.

Step 416: Determine a second inspection result that the second page is a frequently used page, and skip the second page.

Step 412 to step 416 are content about determining the second inspection result. For detailed content, refer to the foregoing descriptions of related content about determining the second inspection result.

In this embodiment of the present invention, after each data table in a first database is traversed according to the database backup method, an operation record of data on a page is subsequently backed up, and the page does not need to be further backed up. For example, a write-ahead log (Write-Ahead Log, WAL) that records the operation record of the data on the page is backed up, to obtain backup data of the database.

Subsequently, after an exception occurs in the database or when a standby node of the database needs to be established, the write-ahead log may be read from the backup data, and an operation is performed on the data on the page based on the operation record in the write-ahead log. When the page is a corrupted page, the operation record is skipped. When the page is a normal page, the operation is normally performed on the data on the page based on the operation record. After all operation records in the backup data are traversed, the database is reproduced.

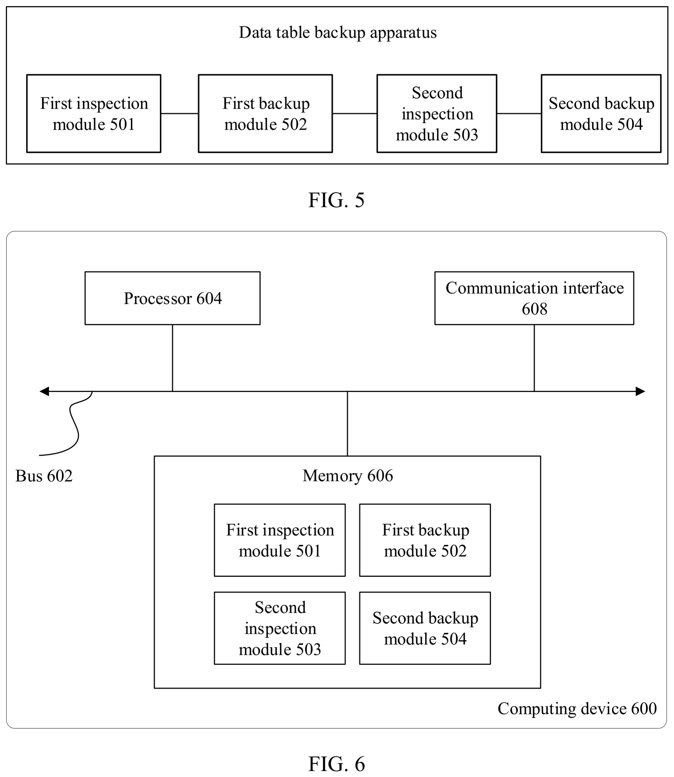

The present invention further provides a database backup apparatus, where a database includes a data table. As shown in FIG. 5, the apparatus includes:
a first inspection module 501, configured to perform a first corrupted-page inspection operation on a first page in the data table, to determine a first inspection result, where the first is used to record metadata of the data table;
a first backup module 502, configured to back up the first page when the first inspection result indicates that the first page is a normal page;
a second inspection module 503, configured to perform a second corrupted-page inspection operation on a second page in the data table based on the first page, to determine a second inspection result, where the second is used to record data in the data table; and
a second backup module 504, configured to back up the second page when the second inspection result indicates that the second page is a corrupted page.

All of the first inspection module 501, the first backup module 502, the second inspection module 503, and the second backup module 504 may be implemented by software or hardware. For example, the following uses the first inspection module 501 as an example and describes an implementation of the first inspection module 501. Similarly, for implementations of the first backup module 502 and the second inspection module 503, refer to the implementation of the first inspection module 501.

When a module is used as an example of a software functional unit, the first inspection module 501 may include code that is run on a computing instance. The computing instance may include at least one of a physical host (a computing device), a virtual machine, or a container. Further, there may be one or more computing instances. For example, the first inspection module 501 may include code that is run on a plurality of hosts, virtual machines, or containers. It should be noted that the plurality of hosts, virtual machines, or containers for running the code may be distributed in a same region (region) or different regions. Further, the plurality of hosts, virtual machines, or containers for running the code may be distributed in a same availability zone (availability zone, AZ) or different AZs. Each AZ includes one data center or a plurality of data centers that are geographically close to each other. Usually, one region may include a plurality of AZs.

Similarly, the plurality of hosts, virtual machines, or containers for running the code may be distributed in a same virtual private cloud (virtual private cloud, VPC) or a plurality of VPCs. Usually, one VPC is arranged in one region. For cross-region communication between two VPCs in a same region and between VPCs in different regions, a communication gateway needs to be deployed in each of the VPCs, and interconnection between the VPCs is implemented through the communication gateway.

When a module is used as an example of a hardware functional unit, the first inspection module 501 may include at least one computing device, for example, a server. Alternatively, the first inspection module 501 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field-programmable gate array (field-programmable gate array, FPGA), a generic array logic (generic array logic, GAL), or any combination thereof.

A plurality of computing devices included in the first inspection module 501 may be distributed in a same region or different regions. The plurality of computing devices included in the first inspection module 501 may be distributed in a same AZ or different AZs. Similarly, the plurality of computing devices included in the first inspection module 501 may be distributed in a same VPC or a plurality of VPCs. The plurality of computing devices may be any combination of computing devices such as a server, an ASIC, a PLD, a CPLD, an FPGA, and a GAL.

It should be noted that, in other embodiments, the first inspection module 501 may be configured to perform any step in the database backup method, the first backup module 502 may be configured to perform any step in the database backup method, the second inspection module 503 may be configured to perform any step in the database backup method, and the second backup module 504 may be configured to perform any step in the database backup method. Steps implemented by the first inspection module 501, the first backup module 502, the second inspection module 503, and the second backup module 504 may be specified as needed. The first inspection module 501, the first backup module 502, the second inspection module 503, and the second backup module 504 implement different steps in the database backup method to implement all functions of the database backup apparatus.

The present invention further provides a computing device 600. As shown in FIG. 6, the computing device 600 includes a bus 602, a processor 604, a memory 606, and a communication interface 608. The processor 604, the memory 606, and the communication interface 608 communicate with each other through the bus 602. The computing device 600 may be a server or a terminal device. It should be understood that quantities of processors and memories in the computing device 600 are not limited in the present invention.

The bus 602 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 6, but this does not mean that there is only one bus or only one type of bus. The bus 602 may include a path for transmitting information between the components (for example, the memory 606, the processor 604, and the communication interface 608) of the computing device 600.

The processor 604 may include any one or more of a central processing unit (central processing unit, CPU), a graphics processing unit (graphics processing unit, GPU), a microprocessor (microprocessor, MP), a digital signal processor (digital signal processor, DSP), or other processors.

The memory 606 may include a volatile memory (volatile memory), for example, a random access memory (random access memory, RAM). Alternatively, the processor 604 may include a non-volatile memory (non-volatile memory), for example, a read-only memory (read-only memory, ROM), a flash memory, a hard disk drive (hard disk drive, HDD), or a solid-state drive (solid-state drive, SSD).

The memory 606 stores executable program code, and the processor 604 executes the executable program code to implement the functions of the first inspection module 501, the first backup module 502, the second inspection module 503, and the second backup module 504, to implement the database backup method. That is, the memory 606 stores instructions for performing the database backup method.

The communication interface 608 uses a transceiver module, for example, but not limited to, a network interface card or a transceiver, to implement communication between the computing device 600 and another device or a communication network.

An embodiment of the present invention further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone. For example, the computing device cluster may be the computing device cluster 120.

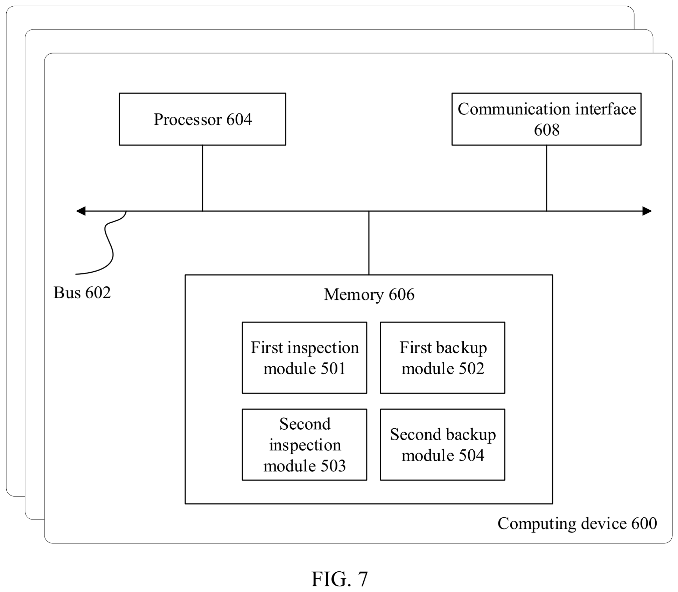

As shown in FIG. 7, the computing device cluster 120 includes at least one computing device 600. A memory or memories 106in one or more computing devices 600 in the computing device cluster 120 may store same instructions for performing the database backup method and a same database.

In some possible implementations, the memory or memories 106 in the one or more computing devices 600 in the computing device cluster may alternatively separately store a part of instructions for performing the database backup method and a part of data in a database. In other words, a combination of the one or more computing devices 600 may jointly execute the instructions for performing the database backup method or store the data in the database.

It should be noted that memories 106 in different computing devices 600 in the computing device cluster may store different instructions for performing some functions of the database backup apparatus. To be specific, instructions stored in memories 106 in different computing devices 600 may implement functions of one or more of the first inspection module 501, the first backup module 502, the second inspection module 503, and the second backup module 504. In some possible cases, the first inspection module 501, the first backup module 502, the second inspection module 503, and the second backup module 504 jointly provide a backup service.

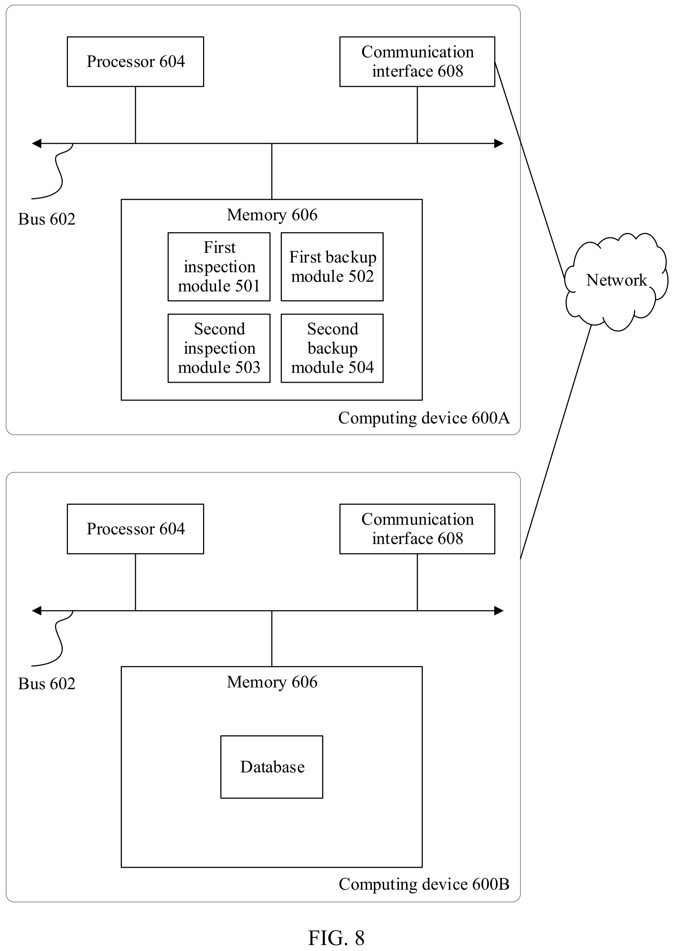

In some possible implementations, the one or more computing devices in the computing device cluster 120 may be connected through a network. The network may be a wide area network, a local area network, or the like. FIG. 8 shows a possible implementation. As shown in FIG. 8, two computing devices 600A and 600B are connected through a network. Specifically, each computing device is connected to the network through a communication interface in the computing device. In this possible implementation, a memory 606 in the computing device 600A stores instructions for performing functions of the first inspection module 501, the first backup module 502, the second inspection module 503, and the second backup module 504. In addition, a memory 106 in the computing device 600B stores data in a database.

In the connection manner of the computing device cluster shown in FIG. 8, because the database backup method provided in the present invention needs to be provided by a backup service and a page needs to be read from a database, functions implemented by the first inspection module 501, the first backup module 502, the second inspection module 503, and the second backup module 504 may be performed by the computing device 600A to provide the backup service, and the database is stored on the computing device 600B.

It should be understood that functions of the computing device 600A shown in FIG. 8 may alternatively be performed by a plurality of computing devices 600, for example, two computing devices 600. Because the first inspection module 501 and the first backup module 502 process a same page, in a possible case, functions of the first inspection module 501 and the first backup module 502 may be performed by one computing device 600. Because the second inspection module 503 and the second backup module 504 process a same page, in a possible case, functions of the second inspection module 503 and the second backup module 504 may be performed by another computing device 600. Similarly, functions of the computing device 600B may alternatively be performed by a plurality of computing devices 600. To be specific, the data in the database is stored on the plurality of computing devices 600.

An embodiment of the present invention further provides a computer program product including instructions. The computer program product may be software or a program product that includes the instructions and that can be run on a computing device or stored in any usable medium. When the computer program product is run on at least one computing device, the at least one computing device is enabled to perform the database backup method.

An embodiment of the present invention further provides a computer-readable storage medium. The computer-readable storage medium may be any usable medium that can be stored on a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the database backup method.

In the foregoing embodiments, descriptions of embodiments have respective focuses. For a part that is not described in detail or recorded in an embodiment, refer to related descriptions in other embodiments.

It should be understood that sequence numbers of the steps in the foregoing embodiments do not mean execution sequences. The execution sequences of the processes should be determined based on functions and internal logic of the processes, and should not be construed as any limitation on the implementation processes of embodiments of the present invention.

The foregoing describes basic principles of the present invention with reference to specific embodiments. However, it should be noted that the advantages, benefits, effects, and the like mentioned in the present invention are merely examples rather than limitations, and it cannot be considered that these advantages, benefits, effect, and the like are necessary for embodiments of this disclosure. In addition, specific details disclosed above are merely intended for giving examples and for ease of understanding, but not for limitations. The foregoing details do not constitute a limitation that this disclosure needs to be implemented by using the foregoing specific details.

The block diagrams of the components, apparatuses, devices, and systems in this disclosure are merely examples, and are not intended to require or imply that connections, arrangements, or configurations need to be performed in a manner shown in the block diagrams. Persons skilled in the art are aware that the components, apparatuses, devices, and systems may be connected, arranged, or configured in any manner. The terms "including", "comprising", "having", and the like are open terms that mean "including but not limited to", and are interchangeable with "including but not limited to". The terms "or" and "and" used herein indicate the term "and/or", and are interchangeable with the term "and/or", unless the context explicitly indicates otherwise. The term "such as" used herein indicates the phrase "such as but not limited to", and is interchangeable with the phrase "such as but not limited to".

It should be further noted that, in the apparatuses, devices, and methods of this disclosure, the components or the steps may be decomposed and/or recombined. The decomposition and/or recombination should be considered as equivalent solutions of this disclosure.

The foregoing descriptions are provided for the purpose of illustration and description. In addition, the descriptions are not intended to limit embodiments of this disclosure to the form disclosed herein. Although a plurality of example aspects and embodiments are discussed above, persons skilled in the art are aware of some of their variations, modifications, changes, additions, and sub-combinations.

It can be understood that various numbers in embodiments of the present invention are merely intended for differentiation for ease of description, but not to limit the scope of embodiments of the present invention.

Finally, it should be noted that the foregoing embodiments are merely intended to describe the technical solutions of the present invention, but not to limit the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A database backup method, wherein the database comprises a data table, and the method comprises:
performing a first corrupted-page inspection operation on a first page in the data table, to determine a first inspection result, wherein the first page is used to record metadata of the data table;
backing up the first page when the first inspection result indicates that the first page is a normal page;
performing a second corrupted-page inspection operation on a second page in the data table based on the first page, to determine a second inspection result, wherein the second page is used to record data in the data table; and
backing up the second page when the second inspection result indicates that the second page is a corrupted page.

2. The method according to claim 1, wherein the data table is marked with a first parameter value, the first parameter indicates a degree of acceptance for a corrupted page in the data table, and the first parameter value is greater than a first threshold; and/or
the database is marked with a second parameter value, the second parameter value indicates a degree of acceptance for a corrupted page in the database, and the second parameter value is greater than a second threshold.

3. The method according to claim 1, wherein the second corrupted-page inspection operation comprises: reading the second page, and checking the second page to obtain a second check result; and when the second check result is that the check fails, obtaining a first check code of the second page, wherein the first check code indicates content of the second page.

4. The method according to claim 3, wherein when second check results obtained through a plurality of consecutive second corrupted-page inspection operations are that check fails, and a first check value obtained through the last one of the plurality of consecutive second corrupted-page inspection operations is the same as a first check value obtained through a previous second corrupted-page inspection operation, the second inspection result indicates that the second page is a corrupted page.

5. The method according to claim 3, wherein the second page comprises a second check code; and
the second check result that the check fails indicates that the second check code on the second page is different from a calculated third check code of the second page, wherein the second check code and the third check code are calculated by using a same algorithm and separately indicate the content of the second page.

6. The method according to claim 5, wherein the first check value is a hash value or the third check code.

7. The method according to claim 3, wherein when second check results obtained through a plurality of consecutive second corrupted-page inspection operations are that check fails, and first check results obtained through any two of the plurality of consecutive second corrupted-page inspection operations are different, the second inspection result indicates that the second page is a frequently used page; and
the method further comprises:
when the second inspection result indicates that the second page is a frequently used page, re-performing a second corrupted-page inspection operation on the second page within a first time period, wherein the first time period is a time period in which a quantity of modifications on the second page is less than or equal to a preset threshold.

8. The method according to claim 1, wherein the method further comprises:
when the first inspection result is that the first page is a corrupted page, skipping backing up the data table.

9. The method according to claim 8, wherein the first corrupted-page inspection operation comprises: reading the first page, and checking the read first page to obtain a first check result; and
when first check results obtained through a plurality of consecutive first corrupted-page inspection operations are that check fails, the first inspection result is that the first page is a corrupted page.

10. The method according to claim 1, wherein the database is a cloud database.

11. A database backup apparatus, wherein the database comprises a data table, and the apparatus comprises:
a first inspection module, configured to perform a first corrupted-page inspection operation on a first page in the data table, to determine a first inspection result, wherein the first is used to record metadata of the data table;
a first backup module, configured to back up the first page when the first inspection result indicates that the first page is a normal page;
a second inspection module, configured to perform a second corrupted-page inspection operation on a second page in the data table based on the first page, to determine a second inspection result, wherein the second is used to record data in the data table; and
a second backup module, configured to back up the second page when the second inspection result indicates that the second page is a corrupted page.

12. A computing device cluster, comprising at least one computing device, wherein each computing device comprises a processor and a memory, wherein
a processor of the at least one computing device is configured to execute instructions stored in a memory of the at least one computing device, to enable the computing device cluster to perform the method according to any one of claims 1 to 10.

13. A computer program product comprising instructions, wherein when the instructions are run by a computing device cluster, the computing device cluster is enabled to perform the method according to any one of claims 1 to 10.

14. A computer-readable storage medium, comprising computer program instructions, wherein when the computer program instructions are executed by a computing device cluster, the computing device cluster performs the method according to any one of claims 1 to 10.
